(19) Europäisches Patentamt
European Patent Office
Office européen des brevets

(11) **EP 4 339 156 B1**

(12) **EUROPEAN PATENT SPECIFICATION**

(45) Date of publication and mention
of the grant of the patent:
**04.03.2026 Bulletin 2026/10**

(21) Application number: **23740474.4**

(22) Date of filing: **12.01.2023**

(51) International Patent Classification (IPC):
**C01B 32/158** (2017.01)    **C01B 32/174** (2017.01)
**C01B 32/162** (2017.01)

(52) Cooperative Patent Classification (CPC):
**C01B 32/162; C01B 32/174;** C01B 2202/08

(86) International application number:
**PCT/KR2023/000586**

(87) International publication number:
**WO 2023/136631 (20.07.2023 Gazette 2023/29)**

(54) **CARBON NANOTUBE BUNDLES**

KOHLENSTOFFNANORÖHRCHENBÜNDEL

FAISCEAUX DE NANOTUBES DE CARBONE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.01.2022 KR 20220005133**

(43) Date of publication of application:
**20.03.2024 Bulletin 2024/12**

(73) Proprietor: **LG Chem, Ltd.
Seoul 07336 (KR)**

(72) Inventors:
• **LEE, Geun Sung
Daejeon 34122 (KR)**
• **KIM, Eui Tae
Daejeon 34122 (KR)**
• **LEE, Eun Jeong
Daejeon 34122 (KR)**
• **OH, Eu Gene
Daejeon 34122 (KR)**
• **PARK, Sung Eun
Daejeon 34122 (KR)**
• **KIM, Ki Hwan
Daejeon 34122 (KR)**

(74) Representative: **Goddar, Heinz J.
Boehmert & Boehmert
Anwaltspartnerschaft mbB
Pettenkoferstrasse 22
80336 München (DE)**

(56) References cited:
EP-A1- 3 355 391        EP-A1- 3 805 154
WO-A1-2018/182111      JP-A- 2010 013 312
KR-A- 20170 030 438    KR-A- 20190 140 275
KR-A- 20210 033 239

• WANG ET AL: "Synthesis of multi-walled carbon nanotube bundles with uniform diameter", MATERIALS LETTERS, ELSEVIER, AMSTERDAM, NL, vol. 61, no. 8-9, 12 March 2007 (2007-03-12), pages 1955 - 1958, XP005922111, ISSN: 0167-577X, DOI: 10.1016/ J.MATLET.2006.07.111

## Description

### TECHNICAL FIELD

The present invention relates to bundle-type carbon nanotubes capable of achieving excellent conductivity and dispersibility due to the great bundle thickness, large particle size, and a great number of strands of carbon nanotubes in a single bundle.

### BACKGROUND ART

Carbon nanotube materials include fullerenes, carbon nanotubes (CNTs), graphenes, and graphite nanoplates, and the like, according to the shape of the material, and among them, the carbon nanotubes are macromolecules in which a hexagonal honeycomb-shaped graphite sheet, in which one carbon atom is bonded to other three carbon atoms, is rolled up to have a diameter of nanometer scales.

The carbon nanotubes are hollow and light, and have electrical conductivity as good as copper, thermal conductivity as excellent as diamond, and tensile force equivalent to that of steel. According to the rolled-up shape, the carbon nanotubes may be classified into single-walled carbon nanotubes (SWCNTs), multi-walled carbon nanotubes (MWCNTs), and rope carbon nanotubes.

Recently, research on carbon nanotube synthesis technology capable of synthesizing a large amount of carbon nanotubes at one time is being actively conducted, and among various methods, chemical vapor deposition (CVD) using a fluidized bed reactor can easily synthesize a large amount of carbon nanotubes, and thus, is most preferred in actual industrial fields.

Specifically, in the chemical vapor deposition, a particle-shaped catalyst for producing carbon nanotubes is filled in a fluidized bed reactor, and then is made to float while injecting a carbon source gas and a flow gas into the fluidized bed reactor. Thereafter, the reactor is heated to decompose the carbon source gas on the surface of the floating catalyst, thereby synthesizing carbon nanotubes.

In a process of producing carbon nanotubes using such a chemical vapor deposition, carbon nanotubes are synthesized by growing carbon nanotubes on the surfaces of catalyst particles, and thus the properties of the produced carbon nanotubes are determined according to the properties of the catalyst particles. For example, when the size of catalyst particles is large, the particles of carbon nanotubes growing therefrom are also large, and the orientation of carbon nanotubes growing therefrom exhibit also excellent if the surface of the catalyst is uniform. Therefore, in order to produce high-quality carbon nanotubes, it is necessary to study catalysts capable of preparing such carbon nanotubes.

Meanwhile, due to the characteristics of the carbon nanotubes having excellent conductivity, carbon nanotubes have recently been used as a conductive material in fields of secondary batteries, etc. In order to use carbon nanotubes as a conductive material, the electrical conductivity of the carbon nanotubes themselves should be excellent, and since the conductive material is used in the form of a dispersion solution, the dispersibility of the carbon nanotubes should also be excellent. Therefore, it is required to conduct research on a method for synthesizing carbon nanotubes with excellent electrical conductivity and dispersibility.

### <u>Prior Art Document</u>

    (Patent Document 1) KR 10-2020-0141772 A
    (Patent Document 2) KR 10-2018-0101222 A

Materials Letters, vol. 61, no. 8-9, pages 1955-1958, discloses bundled carbon nanotubes having a diameter of 15-25 microns and a length of over 500 microns.

EP 3805 154 A1 discloses bundled carbon nanotubes having a D50 of 10 to 200 microns.

EP 3 355 391 A1 discloses the use of nanotube bundles as dispersions with water and PVP.

### DETAILED DESCRIPTION OF THE INVENTION

### TECHNICAL PROBLEM

An object of the present invention is to provide bundle-type carbon nanotubes, which exhibit excellent conductivity and dispersibility due to the great bundle thickness, large particle size, and a greater number of strands of carbon nanotubes in a single bundle.

## TECHNICAL SOLUTION

According to an aspect of the present invention, there is provided carbon nanotubes and a dispersion solution including the carbon nanotubes.

Specifically, (1) the present invention provides a bundle-type carbon nanotube having an average bundle thickness of 10 $\mu$m to 30 $\mu$m and a D50 of 10 $\mu$m to 30 $\mu$m.

(2) The present invention provides bundle-type carbon nanotubes according to (1), wherein the standard deviation of the bundle thickness is 3 to 10 $\mu$m.

(3) The present invention provides bundle-type carbon nanotubes according to any one of (1) to (2), wherein the average number of carbon nanotube strands in a unit bundle is over 100,000.

(4) The present invention provides bundle-type carbon nanotubes according to any one of (1) to (3), wherein the average number of carbon nanotube strands in a unit bundle is 100,000 to 50 million.

(5) The present invention provides bundle-type carbon nanotubes according to any one of (1) to (4), wherein a particle size half width is 2 to 15 $\mu$m.

(6) The present invention provides a carbon nanotube dispersion solution comprises: the carbon nanotube according to any one of (1) to (5); a dispersion medium; and a dispersant.

## ADVANTAGEOUS EFFECTS

Carbon nanotubes according to the present invention may exhibit excellent conductivity and dispersibility due to the large bundle thickness, large particle size, and a greater number of strands of carbon nanotubes in a single bundle, and may thus be particularly suitable for use as a conductive material in a secondary battery. In addition, as the carbon nanotubes form aligned bundles, it may be easier to control the unwinding and length of the bundles when the carbon nanotubes are applied to a dispersion solution.

## BRIEF DESCRIPTION OF DRAWING

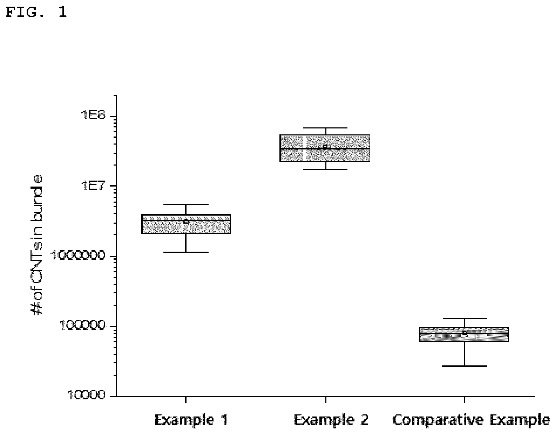

FIG. 1 is a graph showing results of calculating the number of strands in a bundle of carbon nanotube units for Examples 1 and 2 and Comparative Example according to the present invention.

## MODE FOR CARRYING OUT THE INVENTION

Hereinafter, the present invention will be explained in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Bundle-type Carbon Nanotubes

A catalyst used in a carbon nanotube production process using a chemical vapor deposition is generally prepared using a support method. Producing a catalyst using the support method provides advantages of being simple and economical, but in many cases, an active ingredient is not uniformly supported on the surface of a support particle during a support process. Accordingly, even when carbon nanotubes are synthesized using the catalyst thus produced, there is a problem in that the carbon nanotubes do not grow uniformly.

Meanwhile, when the catalyst is prepared using atomic layer deposition (ALD) other than the support method, an active layer may be formed uniformly and thinly on the surface of the support, and thus the carbon nanotubes prepared from the catalyst having a uniform and thin active layer may form a large bundle structure with excellent alignment. When the carbon nanotubes form a bundle structure, the carbon nanotubes may be well dispersed by being mixed with a polymer or a dispersion medium, and may thus be particularly suitable for use as a conductive material.

In consideration of this fact, the inventor of the present invention invented carbon nanotubes which are produced using catalysts prepared using atomic layer deposition, and may exhibit excellent conductivity and dispersibility due to the high bundle thickness, large particle size, and a great number of strands of carbon nanotubes in a single bundle.

Specifically, the present invention provides bundle-type carbon nanotubes having an average bundle thickness of 10 $\mu$m to 30 $\mu$m, and a D50 of 10 $\mu$m to 30 $\mu$m.

The average bundle thickness of the carbon nanotubes provided herein is 10 to 30 $\mu$m. The average bundle thickness may be measured from images of carbon nanotubes observed through a scanning electron microscope (SEM), and may be simply measured using Image J software. The carbon nanotubes provided herein exhibit a greater bundle thickness than the carbon nanotubes prepared from catalysts prepared using conventional support methods. When the average bundle thickness of the carbon nanotubes is within the above range, the carbon nanotubes have a technical advantage of having better conductivity.

A median particle size (D50) of the carbon nanotubes provided herein is 10 to 30 $\mu$m. The D50 indicates the particle size where the cumulative percentage reaches 50% in the particle size distribution of carbon nanotubes, and is different in concept from the above-described average bundle thickness. Since the particle size distribution of carbon nanotubes may have various shapes, the D50 and the above-described average bundle thickness are independent variables and it is difficult to assert that the average bundle thickness and the D50 are proportional to each other. However, when the average bundle thickness is great, it is highly likely that the D50 is large. The D50 may be measured using a conventional particle size analyzer, for example, using a particle size analyzer (Nicomp Ltd.). When the D50 of the carbon nanotube is within the above range, the carbon nanotube is advantageous in that the degree of alignment of carbon nanotubes is high and the mechanical properties are excellent. The carbon nanotube provided herein can have excellent electrical conductivity and dispersibility as the above-described average bundle thickness and D50 satisfy the above conditions.

In another aspect of the carbon nanotubes provided herein, the standard deviation of the bundle thickness of the carbon nanotubes may be 3 to 10 $\mu$m, preferably 5 to 10 $\mu$m. When the carbon nanotubes bundle thickness and D50 satisfy the above conditions and the standard deviation of the bundle thickness is within the above range, the bundle thickness of the carbon nanotubes is sufficiently uniform, so that the phenomenon of aggregation of the carbon nanotubes during preparation of the dispersion solution can be suppressed.

In another aspect of the carbon nanotubes provided herein, the carbon nanotubes may have a particle size half width of 2 to 15 $\mu$m, preferably 5 to 10 $\mu$m. The particle size half width is a value that may be obtained together with D50, D90, and D10 values obtained from a particle size distribution of carbon nanotubes, and may be measured through a particle size analyzer. When the particle size half width is within the above range, the particle size distribution of the carbon nanotubes is uniform, and thus excellent physical properties can be achieved.

In another aspect of the carbon nanotubes provided herein, the average number of carbon nanotube strands in a unit bundle may be 100,000 or more, preferably 500,000 or more, particularly preferably 1 million or more, and may be 50 million or less, preferably 45 million or less, and particularly preferably 40 million or less. When the carbon nanotube producing-catalyst is prepared by the conventional support method, the active layer on the surface is not uniformly distributed, and thus the carbon nanotube strands often become entangled during the growth process of carbon nanotube. As a result, the number of carbon nanotube strands within the unit bundle is relatively small because the carbon nanotube strands are entangled. However, since the surface active layer of the carbon nanotube according to the present invention is prepared from a very uniform catalyst, the number of carbon nanotube strands in the unit bundle is very great. When the number of strands of carbon nanotubes in unit bundle is large as above, the bulk density of carbon nanotubes is large, and it is advantageous in that sufficient electrical conductivity may be achieved even when a small amount of carbon nanotubes are used. Meanwhile, the number of carbon nanotube strands in the unit bundle is calculated by observing carbon nanotubes as SEM images, computing the cross-sectional area of multiple bundles, assuming the area (region) occupied by a single strand as a square that has one side the length of which is the average diameter of carbon nanotubes, and dividing the cross-sectional area of the bundle by the area of the square. The average value of the number of strands calculated as above may be set as the average of the number of carbon nanotube strands.

In another aspect of the carbon nanotubes provided herein, the carbon nanotubes may have a specific surface area of 100 $m^2$/g to 1000 $m^2$/g, preferably 200 $m^2$/g to 800 $m^2$/g. When the specific surface area of the carbon nanotubes is within the above range, there may be advantages that the diameter of the carbon nanotubes is small and the number of walls is small. Meanwhile, the specific surface area may be measured by the BET method, and more specifically, the specific surface area may be calculated by measuring the amount of nitrogen gas adsorbed at liquid nitrogen temperature (77K) using a specific surface area analyzer.

In another aspect of the carbon nanotubes provided herein, the carbon nanotubes may have an aspect ratio of 500 to 8000, preferably 2000 to 6000. When the aspect ratio of the carbon nanotubes is within the above-described range, it may be advantageous in that the carbon nanotubes have excellent alignment and thus excellent mechanical properties. The aspect ratio may be calculated on the basis of the average thickness measured using TEM and the length of the carbon nanotubes in the bundle measured using a SEM.

**Carbon nanotube dispersion solution**

The present invention provides a dispersion solution containing the above-described carbon nanotubes. Specifically, the present invention provides a carbon nanotube dispersion solution containing the above carbon nanotubes, a dispersion medium, and a dispersant.

The dispersion medium may be a medium for dispersing carbon nanotubes, may be a water-based or oil-based solvent, and more specifically, may be at least one selected from among water, methanol, ethanol, propanol, acetone, dimethyl formamide (DMF), dimethyl acetamide, dimethyl sulfoxide (DMSO) or N-methylpyrrolidone (NMP).

The dispersant is an additive which is added to further increase the dispersibility of the dispersion solution, and an appropriate dispersant may be selected and used according to the type of the dispersion medium described above. For example, styrene butylene rubber, carboxymethyl cellulose, hydrogenated acrylonitrile butadiene rubber, polyvinylpyrrolidone or polyvinyl butyral may be used as the dispersant.

In the carbon nanotube dispersion solution provided herein, the content of carbon nanotubes may be 1 to 10 wt%. When the content of the carbon nanotubes is excessively low, sufficient conductivity may not be attained when the dispersion solution is used as a conductive material. When the content of the carbon nanotubes is excessively high, the viscosity of the dispersion solution becomes too high, so the processability may be deteriorated.

In the carbon nanotube dispersion solution provided herein, the content of dispersant may be 0.1 to 5 wt%. When the content of the dispersant is excessively less, the above-described functions of the dispersant cannot be sufficiently exhibited; and when the content of the dispersant is excessively high, the dispersant itself may rather increase the viscosity of the dispersion solution. A person skilled in the art may select and apply the appropriate type and content of the dispersant depending on the desired effect.

Hereinafter, the present invention will be described in more detail with reference to Examples and Experimental Examples in order to specifically describe the present invention, but is not limited to the Examples and Experimental Examples. The Examples according to the present invention may be modified in various different forms, and the scope of the present invention should not be interpreted to be limited to the examples described below. Rather, the Examples of the present invention are provided so that this description will be thorough and complete, and will fully convey the scope of the present invention to those skilled in the art.

### Materials

A pre-treatment was performed such that hydrotalcite having a specific surface area of 20 $m^2/g$, a number-average particle size of 3.6 $\mu$m, and a volume average particle size of 36 $\mu$m was dried for 10 hours in a vacuum chamber heated at 120 °C to make the moisture content become 10 ppm or less. As a catalyst precursor for forming an active layer, bis(N-tert-butyl-N'-ethylpropionamidinato) cobalt(II) (CoAMD) was used.

### Preparation of Catalyst

The pretreated hydrotalcite was applied thinly and uniformly on a glass substrate using a blade coater. Thereafter, the substrate was loaded into a chamber, the pressure was reduced to 0.1 Torr or less, and then the substrate was heated to 200 °C. After the heating was completed, CoAMD, which was pressurized and heated to 90 °C, was injected into the chamber for 0.1 seconds, and in this process, 100 sccm of nitrogen gas was used as a carrier gas. After the injection of CoAMD was completed, the process of causing 100 sccm of nitrogen gas to flow for 2 seconds was repeated three times, and then 100 sccm of nitrogen gas was made to flow for 30 seconds to complete the primary purging. Thereafter, water vapor ($H_2O$) was injected for 0.2 seconds as a reaction gas, and in this process, 100 sccm of nitrogen gas was used as a carrier gas. After the previous injection of water vapor was completed, the process of causing 100 sccm of nitrogen gas to flow for 2 seconds was repeated two times to complete the secondary purging. After the reaction was completed, 100 sccm of nitrogen gas was made to flow again for 90 seconds to complete the secondary purging. The above processes were set as one cycle and the cycle was repeated 10 times in total. As a result, catalyst particles in which a cobalt oxide catalyst layer having a thickness of 0.9 nm was uniformly formed were obtained.

### Example 1

15 mg of the previously prepared catalyst particles were introduced into a chemical vapor deposition reactor, hydrogen gas and ethylene gas were introduced into the reactor at a volume ratio of 1:2, and then the reactor was heated to 670 °C. The reaction proceeded for 90 minutes to obtain carbon nanotubes.

### Example 2 (not according to the invention)

15 mg of the previously prepared catalyst particles were reduced for 2 minutes in a hydrogen and argon atmosphere at 670 °C, and carbon nanotubes were obtained in the same manner as in Example 1 except that the reduced catalyst was used.

**Comparative Example**

An immersion liquid was prepared by dissolving 5 g of Co (NO$_3$) ·2H$_2$O in 100 ml of water, and then a hydrotalcite support same as that used in Example 1 was immersed in the immersion liquid. Thereafter, the support was dried at 100 °C and fired in the air at 600 °C to obtain catalyst particles. Using the obtained catalyst particles, carbon nanotubes were obtained in the same manner as in Example 1 above.

**Experimental Example 1. Confirmation of bundle thickness of carbon nanotubes produced from catalyst**

The bundle thickness was confirmed for the carbon nanotubes obtained in the above Examples and Comparative Examples. The bundle thickness was measured from the SEM image, and the bundle thickness was measured for a total of 20 carbon nanotubes, and the average, standard deviation, and minimum/maximum values were calculated.

[Table 1] (example 2 not according to the invention)

|  | Example 1 | Example 2 | Comparative Example |
|---|---|---|---|
| Average bundle thickness ($\mu$m) | 11.8 | 25 | 3.2 |
| standard deviation of bundle thickness ($\mu$m) | 5 | 8.6 | 0.9 |
| minimum/maximum values of bundle thickness ($\mu$m) | 6.4/23.1 | 14.6/42.7 | 2.3/4.9 |

As seen in Table 1, it can be confirmed that the carbon nanotubes according to the present invention have a large bundle thickness, and thus the content of the carbon nanotubes in the same volume is increased, so that high electrical conductivity and excellent mechanical properties can be achieved even with a small amount.

**Experimental Example 2. Measurement of D10, D50 and D90 values and particle size half width of produced carbon nanotubes**

The D50 and particle size half width of the carbon nanotubes obtained in the above Examples and Comparative Examples were measured. As a particle size analyzer, Mastersizer 3000 (Malvern Ltd.) was used, and the measurement results are summarized in Table 2 below.

[Table 2] ( Example 2 is not according to the invention)

|  | Example 1 | Example 2 | Comparative Example |
|---|---|---|---|
| D50 ($\mu$m) | 14.9 | 31.6 | 3.7 |
| D10 ($\mu$m) | 8.1 | 17.1 | 1.7 |
| D90 ($\mu$m) | 21.3 | 40.5 | 4.4 |
| Particle size half width ($\mu$m) | 6.2 | 9.7 | 1.1 |

As seen in Table 2, the carbon nanotubes obtained in Examples showed higher particle size values and particle size half width values than those of the carbon nanotubes obtained in Comparative Examples. Through this, it can be confirmed that the carbon nanotubes according to the present invention exhibit excellent electrical conductivity due to the high content of carbon nanotubes in individual particles.

**Experimental Example 3. Confirmation number of strands in unit bundle of produced carbon nanotubes**

After obtaining 5 SEM images for each Example and Comparative Example, the cross-sectional area of 20 or more bundles was obtained. Thereafter, the number of carbon nanotube strands in the bundle was calculated by dividing the cross-sectional area of the bundle by the area of a square having one side of which the length is the average diameter of carbon nanotubes. Here, it is assumed that the area (region) occupied by a single strand of carbon nanotube is the square. The results are shown in FIG. 1 and Table 3 below.

[Table 3] (Example 2 is not according to the invention)

| | Example 1 | Example 2 | Example 3 |
|---|---|---|---|
| Range of number of strands in unit bundle | $1.17*10^6 \sim 5.41*10^6$ | $1.71*10^7 \sim 6.73*10^7$ | $2.74*10^4 \sim 12.7*10^4$ |
| | $3.10*10^6$ | $3.70*70^7$ | $7.93*10^4$ |

As seen in Table 3, the number of strands of the carbon nanotubes included in the unit bundle is greater in the carbon nanotubes of Examples of the present invention than those of Comparative Examples, and from this result, it can be inferred that the carbon nanotubes according to the present invention will exhibit excellent electrical conductivity.

**Experimental Example 4. Confirmation degree of alignment of produced carbon nanotubes**

When the number of outermost carbon nanotubes ($N_R$) of the bundle is less than the average number of carbon nanotube strands ($N_B$) in the unit bundle, it is likely that neighboring carbon nanotubes are oriented in the same direction. In consideration of this fact, the degree of alignment of the carbon nanotubes according to each Example and Comparative Example was calculated and by obtaining the number of outermost carbon nanotubes by dividing the bundle thickness by the average diameter of the carbon nanotubes and then defining a $N_B/N_R$ value.
$$- \ \mathrm{Alignment} \ = \ \mathrm{NB/NR}$$

The results are summarized in Table 4 below.

[Table 4] (Example 2 is not according to the invention)

| | Example 1 | Example 2 | Comparative Example |
|---|---|---|---|
| Alignment | 467.45 | 1676.9 | 79.97 |

As seen in Table 4, it can be seen that the carbon nanotubes of Examples according to the present invention exhibit a higher degree of alignment than the carbon nanotubes of the Comparative Examples, and this makes it possible to infer that the carbon nanotubes according to the present invention will have excellent electrical properties.

**Claims**

1.  A bundle-type carbon nanotubes comprising an average bundle thickness of 10 to 30 $\mu$m and a D50 of 10 to 30 $\mu$m.

2.  The carbon nanotubes of claim 1, wherein the standard deviation of the bundle thickness is 3 to 10 $\mu$m.

3.  The carbon nanotubes of claim 1, wherein the average number of carbon nanotube strands in a unit bundle is 100,000 or more.

4.  The carbon nanotubes of claim 3, wherein the average number of carbon nanotube strands in a unit bundle is 100,000 to 50 million.

5.  The carbon nanotubes of claim 1, wherein a particle size half width is 2 to 15 $\mu$m.

6.  A carbon nanotube dispersion solution comprises:

    the carbon nanotube of claim 1;
    a dispersion medium; and
    a dispersant.

**Patentansprüche**

1. Gebündelte Kohlenstoffnanoröhrchen, die eine durchschnittliche Bündeldicke von 10 bis 30 μm und einen D50-Wert von 10 bis 30 μm aufweisen.

2. Kohlenstoffnanoröhrchen nach Anspruch 1, wobei die Standardabweichung der Bündeldicke 3 bis 10 μm beträgt.

3. Kohlenstoffnanoröhrchen nach Anspruch 1, wobei die durchschnittliche Anzahl von Kohlenstoffnanoröhrchensträngen in einem Einheitsbündel 100.000 oder mehr beträgt.

4. Kohlenstoffnanoröhrchen nach Anspruch 3, wobei die durchschnittliche Anzahl von Kohlenstoffnanoröhrchensträngen in einem Einheitsbündel 100.000 bis 50 Millionen beträgt.

5. Kohlenstoffnanoröhrchen nach Anspruch 1, wobei eine Halbwertsbreite der Teilchengröße 2 bis 15 μm beträgt.

6. Kohlenstoffnanoröhrchendispersionslösung, die aufweist:

   das Kohlenstoffnanoröhrchen nach Anspruch 1;
   ein Dispersionsmedium; und
   ein Dispergiermittel.


**Revendications**

1. Nanotubes de carbone de type faisceau comprenant une épaisseur de faisceau moyenne de 10 à 30 μm et un D50 de 10 à 30 μm.

2. Nanotubes de carbone selon la revendication 1, où l'écart standard de l'épaisseur de faisceau est 3 à 10 μm.

3. Nanotubes de carbone selon la revendication 1, où le nombre moyen de brins de nanotube de carbone dans un faisceau unitaire est égal ou supérieur à 100 000.

4. Nanotubes de carbone selon la revendication 3, où le nombre moyen de brins de nanotube de carbone dans un faisceau unitaire est 100 000 à 50 millions.

5. Nanotubes de carbone selon la revendication 1, où une demi-largeur de taille de particule est 2 à 15 μm.

6. Solution de dispersion de nanotubes de carbone comprenant :

   le nanotube de carbone selon la revendication 1 ;
   un véhicule de dispersion ; et
   un dispersant.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200141772 A
- KR 1020180101222 A
- EP 3805154 A1
- EP 3355391 A1

**Non-patent literature cited in the description**

- *Materials Letters*, vol. 61 (8-9), 1955-1958